# EUROPEAN PATENT APPLICATION

(11) **EP 2 187 611 A1**
(43) Date of publication of application: **19.05.2010**
(21) Application number: 09809177.0
(22) Date of filing: 19.01.2009
(51) Int. Cl.: H04M 3/523, H04L 12/58

(54) **METHOD, DEVICE AND CALL CENTER SYSTEM FOR TEXT CHAT ROUTING**

(30) Priority: 29.08.2008 CN 200810210180
(71) Applicant: Huawei Technologies Co., Ltd., Longgang District, Shenzhen Guangdong 518129 (CN)
(72) Inventor: XIA, Jiajin, Shenzhen Guangdong 518129 (CN); ZHANG, Tao, Shenzhen Guangdong 518129 (CN)
(74) Representative: Thun, Clemens
(86) International application number: PCT/CN2009/070204
(87) International publication number: WO 2010/022592

(57) **Abstract**

A method and device for routing a text chat and a call center system, which relate to the field of communication technology and enable one operator agent to provide a text chat service for several clients at the same time. The method includes the following steps. When receiving a request message of a text chat call, an operator agent state is inquired, and the operator agent state includes a serving state. When the inquired operator agent state is the serving state, a routing of the text chat call is configured. The present invention is able to save a service cost of a call center, and enhance a service quality of the call center system.

## Description

This application claims priority to Chinese patent application No. 200810210180.0 entitled "Method and Device for Routing a Text Chat and Call Center System", filed on August 29th, 2008. The contents of the above identified applications are incorporated herein by reference in its entirety.

### FIELD OF THE INVENTION

The embodiments of the present invention relates to the field of communication technology, and more particularly to a method and a device for routing a text chat and a call center system.

### BACKGROUND

A text chat is a multimedia service channel provided by a call center system. A client may log in to a WEB page of a client server of a call center, and initiate a request of a text chat call on the WEB page. The call center routes the text chat call of the client to an operator with a text chat skill. The operator provides a consulting service, a complaint service, and the like, for the client by means of the text chat.

In the conventional technology, an operator agent state is set to an idle state, a busy state, and an offline state. After the text chat call is routed to an agent in the idle state with the text chat skill, this agent is completely occupied by one client, with the agent state thereof being set to the busy state from the original idle state. The agent can only provide a text chat service for this client, and cannot access another text chat service.

In a process of realizing the present invention, the inventor found at least the following problem in the conventional technology.

Since a manual agent is a rare resource in the call center system, the scheme in the conventional technology causes serious waste to the resource of the call center.

### SUMMARY

Embodiments of the present invention provide a method and a device for routing a text chat and a call center system, which may enable one operator agent to provide a text chat service for several clients at the same time.

To achieve the above object, the embodiments of the present invention are realized by the following technical schemes.

A method for routing a text chat includes:

An operator agent state is inquired when receiving a request message of a text chat call, and the operator agent includes a serving state.

The routing of the text chat call is configured when the inquired operator agent state is the serving state.

A device for routing a text chat includes an agent state inquiring module and a routing configuring module.

The agent state inquiring module is adapted to inquire an operator agent state when receiving a request message of a text chat call, and the operator agent state includes a serving state.

The routing configuring module is adapted to configure the routing of the text chat call when the operator agent state inquired by the agent state inquiring module is the serving state.

A call center system is provided, including a client server, a media access module, a computer telephony integration (CTI) platform, and an operator agent server.

The client server is adapted for a client to log in to the call center system, send a request message of a text chat call to the media access module, submit and receive a text chat content message.

The media access module is adapted to send the received request message of the text chat call to the CTI platform, send the text chat content message submitted by the client to an operator agent according to a call answer success message returned by the CTI platform, and send a text chat content message replied by the operator agent to the client.

The CTI platform is adapted to inquire an operator agent state including a serving state when receiving the request message of the text chat call sent by the media access module, configure the routing of the text chat call and send a call answer request message to the operator agent according to a configuration result of the routing of the text chat call when the inquired operator agent state is the serving state, receive the call answer success message returned by the operator agent, and return the call answer success message to the media access module.

The operator agent server is adapted for the operator agent to log in to the call center system, return the call answer success message to the CTI platform according to the call answer request message sent by the CTI platform, receive and reply to the text chat content message sent by the media access module.

It can be known from the above technical schemes that, the operator agent is set, and the operator agent state includes the serving state. The operator agent is inquired when receiving the request message of the text chat call and the routing of the text chat call is configured when the inquired operator agent state is the serving state, which may enable one operator agent to provide the text chat service for several clients at the same time.

### BRIEF DESCRIPTION OF THE DRAWINGS

FIG. 1 is a flowchart of a method for routing a text chat according to an embodiment of the present invention;

FIG. 2 is a flowchart of a method for routing a text chat according to another embodiment of the present invention;

FIG. 3 is a structural view of a device for routing a text chat according to an embodiment of the present invention;

FIG. 4 is a structural view of a device for routing a text chat according to another embodiment of the present invention;

FIG. 5 is a schematic view of components of a call center system according to an embodiment of the present invention; and

FIG. 6 is a flowchart of the call center system processing a text chat message according to an embodiment of the present invention.

### DETAILED DESCRIPTION

Technical schemes provided by embodiments of the present invention will be described in further detail with reference to the accompanying drawings in the embodiments of the present invention hereinafter.

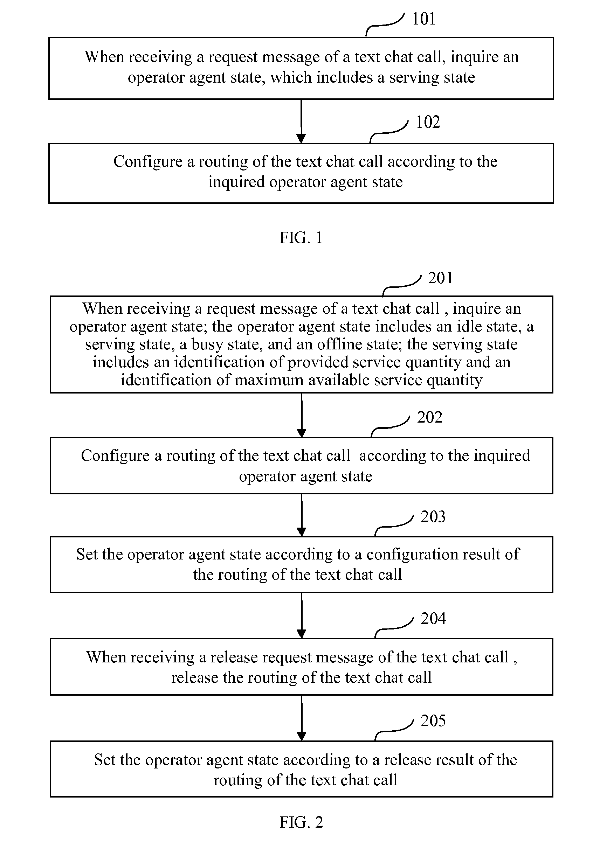

Referring to FIG. 1, it is a flowchart of a method for routing a text chat according to an embodiment of the present invention, which includes the following steps.

Step 101: When receiving a request message of a text chat call, an operator agent state is inquired, and the operator agent state includes a serving state.

Unlike a conventional voice chat service, a text chat, being a multimedia service, enables one operator agent to provide the text chat service for several clients at the same time by the following way. An operator agent state is set, which includes a serving state. The serving state includes an identification of provided service quantity and an identification of maximum available service quantity. After a routing of the text chat call is established between an operator agent in an idle state and a client, this operator agent is set to the serving state, and the provided service quantity is identified as 1. After this operator agent in the serving state establishes a routing of the text chat call with a new client, the identification of provided service quantity is increased by 1. As such, each time a new routing of the text chat call is established, the identification of provided service quantity is increased by 1, until the identification of provided service quantity of this operator agent in the serving state is equal to the identification of maximum available service quantity, e.g., 10, and then the operator agent is set to the busy state. In such a way, one operator agent may provide the text chat service for several clients at the same time.

Step 102: When the inquired operator agent state is the serving state, the routing of the text chat call is configured.

The step particularly includes routing the text chat call to the operator agent in the serving state when no operator agent in the idle state but an operator agent in the serving state exists.

A routing configuring scheme is routing a new text chat call to an operator agent in the serving state with a minimum provided service quantity identification, so that all online operator agents process the text chat services equally, thus ensuring an even operator workload. Another routing configuring scheme is routing the new text chat call to an operator agent that is providing the service currently until the service quantity which the operator agent provides reaches the identification of maximum available service quantity, then setting the operator agent to the busy state, and routing a subsequent text chat call to another operator agent in the idle state or in the serving state. The first routing configuring scheme is preferred.

Further, the operator agent state also includes an idle state, a busy state, or an offline state.

In situation I, when the inquired operator agent state is the idle state, the configuring the routing of the text chat call includes routing the text chat call directly to the operator agent.

In situation II, when the inquired operator agent state is the busy state or the offline state, the configuring the routing of the text chat call includes prompting the client to send an offline message, and when an operator agent in the idle state or in the serving state is inquired, routing the offline message to the operator agent for processing.

As all the operator agents are in the busy state or in the offline state currently, it may ensure the client to be served in time by prompting the client to send an offline message, and when an operator agent in the idle state or in the serving state is inquired, routing the offline message to the operator agent for processing, e.g., replying or processing the service via a short message or a call.

In the method for routing a text chat provided by the embodiment of the present invention, the operator agent state is set, and the operator agent state includes an idle state, a serving state, a busy state, and an offline state. The serving state includes an identification of provided service quantity and an identification of maximum available service quantity. The operator agent is inquired when receiving the request message of the text chat call and the routing of the text chat call is configured when the inquired operator agent state is the serving state, which may enable one operator agent to provide the text chat service for several clients at the same time.

Referring to FIG. 2, it is a flowchart of a method for routing a text chat according to another embodiment of the present invention, which includes the following steps.

Step 201: When receiving a request message of a text chat call, an operator agent state is inquired. The operator agent state includes an idle state, a serving state, a busy state, and an offline state. The serving state includes an identification of provided service quantity and an identification of maximum available service quantity.

Step 202: A routing of the text chat call is configured according to the inquired operator agent state.

The routing configuring scheme of this step includes the same situations as the above embodiment, and is not repeated herein.

Step 203: The operator agent state is set according to a configuration result of the routing of the text chat call.

In this step, the setting the operator agent state according to a configuration result of the routing of the text chat call includes the following situations.

In situation I, as an operator agent in the idle state is configured with the routing of the text chat call, the operator agent is set to the serving state.

In situation II, as an operator agent in the serving state is configured with the routing of the text chat call, the identification of provided service quantity of the operator agent is increased by 1. If the identification of provided service quantity having been increased by 1 is smaller than the identification of maximum available service quantity, the operator agent is still set to the serving state.

In situation III, as an operator agent in the serving state is configured with the routing of the text chat call, the identification of provided service quantity of the operator agent is increased by 1. If the identification of provided service quantity having been increased by 1 is equal to the identification of maximum available service quantity, the operator agent is set to the busy state.

Step 204: When receiving a release request message of the text chat call, the routing of the text chat call is released.

Step 205: The operator agent state is set according to a release result of the routing of the text chat call.

In correspondence with setting the operator agent state according to the configuration result of the routing of the text chat call, the setting the operator agent state according to the release result of the routing of the text chat call in this step includes the following situations.

In situation I, as the routing of the text chat call is released from the operator agent in the busy state, the operator agent is set to the serving state.

In situation II, as the routing of the text chat call is released from the operator agent in the serving state, the identification of provided service quantity of operator agent is decreased by 1. If the identification of provided service quantity having been decreased by 1 is zero, the operator agent is set to the idle state.

In situation III, as the routing of the text chat call is released from the operator agent in the serving state, the identification of provided service quantity of the operator agent is decreased by 1. If the identification of provided service quantity having been decreased by 1 is not zero, the operator agent is set to the serving state.

The steps 204 and 205 may update the state of the operator agent in time, provide services for more clients, and enhance a service quality of the call center system.

This embodiment of the present invention is a preferred scheme over the above embodiment. The operator agent state is set, and the operator agent state includes an idle state, a serving state, a busy state, and an offline state. The serving state includes an identification of provided service quantity and an identification of maximum available service quantity. The operator agent is inquired when receiving the request message of the text chat call and the routing of the text chat call is configured when the inquired operator agent state is the serving state, which may enable one operator agent to provide the text chat service for several clients at the same time. Moreover, the operator agent state is set according to the configuration result of the routing of the text chat call, the routing of the text chat call is released when receiving the release request message of the text chat call,, and the operator agent state is set according to a release result of the routing of the text chat call, which may update the operator agent state in time, provide services for more clients, and enhance the service quality of the call center system.

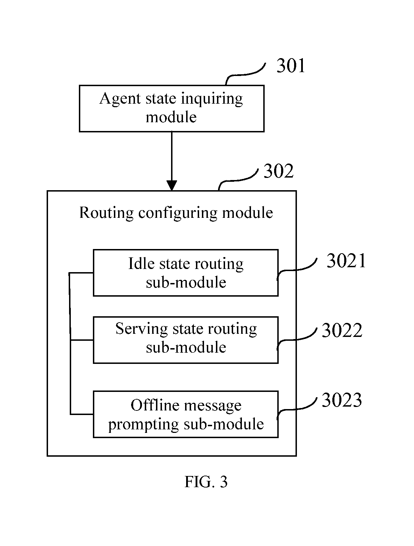

Based on the method for routing a text chat provided by the embodiments of the present invention, refer to FIG. 3, a structural view of a device for routing a text chat according to an embodiment of the present invention is shown. The device includes an agent state inquiring module 301 and a routing configuring module 302.

The agent state inquiring module 301 is adapted to inquire an operator agent state when receiving a request message of a text chat call, and the operator agent state includes a serving state.

The routing configuring module 302 is adapted to configure the routing of the text chat call when the operator agent state inquired by the agent state inquiring module 301 is the serving state.

Particularly, when the operator agent state is the serving state, the routing configuring module 302 routes the text chat call directly to the operator agent.

The operator agent state is set, and the operator agent includes a serving state. The serving state includes an identification of provided service quantity and an identification of maximum available service quantity. After a routing of a text chat call is established between an operator agent in the idle state and a client, this operator agent is set to the serving state, and the provided service quantity is identified as 1. After this operator agent in the serving state establishes a routing of a text chat call with a new client, the identification of provided service quantity is increased by 1. As such, each time a new routing of the text chat call is established, the identification of provided service quantity is increased by 1, until the identification of provided service quantity of this operator agent in the serving state is equal to the identification of maximum available service quantity, e.g., 10, and then the operator agent is set to the busy state. In such a way, one operator agent may provide the text chat service for several clients at the same time.

Further, the operator agent state also includes an idle state, a busy state, or an offline state.

The routing configuring module 302 is also adapted to configure the routing of the text chat call when the inquired operator agent state is the idle state, the busy state, or the offline state.

Particularly, when the operator agent state is the idle state, the routing configuring module 302 routes the text chat call directly to the operator agent. When the operator agent state is the busy state or the offline state, the routing configuring module 302 prompts the client to send an offline message, and when an operator agent in the idle state or in the serving state is inquired, routes the offline message to the operator agent for processing.

The routing configuring module 302 includes an idle state routing sub-module 3021, a serving state routing sub-module 3022, and an offline message prompting sub-module 3023.

The idle state routing sub-module 3021 is adapted to route the text chat call directly to an operator agent in the idle state when the operator agent in the idle state exists.

The serving state routing sub-module 3022 is adapted to route the text chat call to an operator agent in the serving state when no operator agent in the idle state but the operator agent in the serving state exists.

The offline message prompting sub-module 3023 is adapted to prompt the client to send an offline message when all the operator agents are in the busy state or in the offline state, and route the offline message to the operator agent for processing when the operator agent in the idle state or in the serving state exists.

Preferably, when no operator agent in the idle state but operator agents in the serving state exist, the serving state routing sub-module 3022 routes the text chat call to an operator agent in the serving state with a minimum provided service quantity identification. As such, all online operator agents may process the text chat service equally, thereby ensuring an even operator workload.

Preferably, when all the operator agents are in the busy state or in the offline state, and when an operator agent in the idle state or in the serving state exists, the offline message prompting sub-module 3023 routes the offline message to the operator agent for processing, e.g., replying or processing the service via a short message or a call. In such a way, it may ensure the client to be served in time.

The device provided by the embodiment of the present invention may be applied to the methods provided by the embodiments of the present invention. The agent state inquiring module 301 inquires the operator agent state when receiving the request message of the text chat call. The operator agent state includes an idle state, a serving state, a busy state, and an offline state. The serving state includes an identification of provided service quantity and an identification of maximum available service quantity. The routing configuring module 302 configures the routing of the text chat call according to the operator agent state inquired by the agent state inquiring module 301, which may enable one operator agent to provide the text chat service for several clients at the same time.

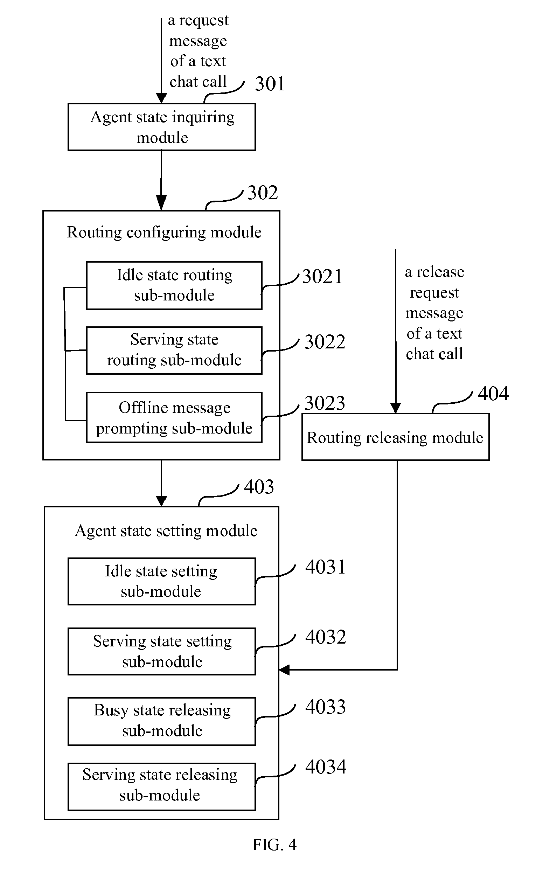

Referring to FIG. 4, it is a structural view of a device for routing a text chat according to another embodiment of the present invention. The device includes an agent state inquiring module 301, a routing configuring module 302, an agent state setting module 403, and a routing releasing module 404.

The agent state inquiring module 301 is adapted to inquire an operator agent state when receiving a request message of a text chat call. The operator agent state includes an idle state, a serving state, a busy state, and an offline state. The serving state includes an identification of provided service quantity and an identification of maximum available service quantity.

The routing configuring module 302 is adapted to configure a routing of the text chat call according to the operator agent state inquired by the agent state inquiring module 301.

Particularly, the process of configuring the routing of the text chat call is the same as the above embodiment, and is not repeated herein.

The agent state setting module 403 is adapted to set the operator agent state according to a configuration result of the routing of the routing configuring module 302.

The routing releasing module 404 is adapted to release the routing of the text chat call when receiving a release request message of the text chat call.

The agent state setting module 403 is further adapted to set the operator agent state according to a release result of the routing of the routing releasing module 404.

The routing configuring module 302 includes an idle state routing sub-module 3021, a serving state routing sub-module 3022, and an offline message prompting sub-module 3023.

The idle state routing sub-module 3021 is adapted to route the text chat call directly to an operator agent in the idle state when the operator agent in the idle state exists.

The serving state routing sub-module 3022 is adapted to route the text chat call to an operator agent in the serving state, when no operator agent in the idle state but the operator agent in the serving state exists.

The offline message prompting sub-module 3023 is adapted to prompt the client to send an offline message when all operator agents are in the busy state or the offline state, and route the offline message to the operator agent for processing when the operator agent in the idle state or in the serving state exists.

Preferably, when no operator agent in the idle state but operator agents in the serving state exist, the serving state routing sub-module 3022 routes the text chat call to an operator agent in the serving state with a minimum provided service quantity identification. As such, all online operator agents may process the text chat service equally, thereby ensuring an even operator workload.

Preferably, when all the operator agents are in the busy state or in the offline state currently, and when an operator agent in the idle state or in the serving state exists, the offline message prompting sub-module 3023 routes the offline message to the operator agent for processing, e.g., replying or processing the service via a short message or a call. In such a way, it may ensure the client to be served in time.

The agent state setting module 403 includes an idle state setting sub-module 4031, a serving state setting sub-module 4032, a busy state releasing sub-module 4033, and a serving state releasing sub-module 4034.

The idle state setting sub-module 4031 is adapted to set the operator agent in the idle state to the serving state when the operator agent in the idle state is configured with the text chat call routing.

The serving state setting sub-module 4032 is adapted to increase the identification of provided service quantity of the operator agent by 1 when the operator agent in the serving state is configured with the routing of the text chat call, still set the operator agent to the serving state if the identification of provided service quantity having been increased by 1 is smaller than the identification of maximum available service quantity, and set the operator agent to the busy state if the identification of provided service quantity having been increased by 1 is equal to the identification of maximum available service quantity.

The busy state releasing sub-module 4033 is adapted to set the operator agent in the busy state to the serving state when the routing of the text chat call is released from the operator agent in the busy state.

The serving state releasing sub-module 4034 is adapted to decrease the identification of provided service quantity of the operator agent by 1 when the routing of the text chat call is released from the operator agent in the serving state, set the operator agent to the idle state if the identification of provided service quantity having been decreased by 1 is zero, and still set the operator agent to the serving state if the identification of provided service quantity having been decreased by 1 is not zero.

The device provided by the embodiment of the present invention may be applied to the methods provided by the embodiments of the present invention. The agent state inquiring module 301 inquires the operator agent state when receiving the request message of the text chat call. The operator agent state includes an idle state, a serving state, a busy state, and an offline state. The serving state includes an identification of provided service quantity and an identification of maximum available service quantity. The routing configuring module 302 configures the routing of the text chat call according to the operator agent state inquired by the agent state inquiring module 301, which may enable one operator agent to provide the text chat service for several clients at the same time. Moreover, the agent state setting module 403 sets the operator agent state according to the configuration result of routing of the text chat call, the routing releasing module 404 releases the text chat call routing when receiving the release request message of the text chat call, the agent state setting module 403 set the operator agent state according to the release result of the routing of the text chat call, which may update the operator agent state in time, provide services for more clients, and enhance the service quality of the call center system.

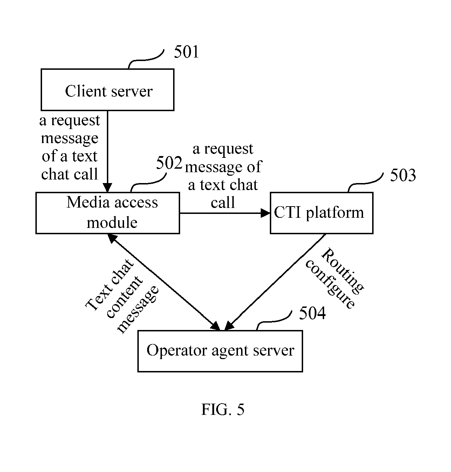

Referring to FIG. 5, it is a schematic view of components of a call center system according to an embodiment of the present invention. The call center system includes a client server 501, a media access module 502, a CTI platform 503, and an operator agent server 504.

The client server 501 is adapted for the client to log in to the call center system, send a request message of a text chat call to a media access module 502, submit and receive a text chat content message.

The media access module 502 is adapted to send the received request message of the text chat call to the CTI platform 503, send the text chat content message submitted by the client to an operator agent according to a call answer success message returned by the CTI platform 503, and send the text chat content message replied by the operator agent to the client.

The CTI platform 503 is adapted to inquire the operator agent state when receiving the text chat call request message sent by the media access module 502, the operator agent state including an idle state, a serving state, a busy state, and an offline state, the serving state including an identification of provided service quantity and an identification of maximum available service quantity. The CTI platform 503 is adapted to configure the routing of the text chat call according to the inquired operator agent state, and send a call answer request message to an operator agent according to the configuration result of the routing of the text chat call, receive a call answer success message returned by the operator agent, and return the call answer success message to the media access module 502.

The operator agent server 504 is adapted for the operator agent to log in to the call center system, return a call answer success message to the CTI platform 503 according to the call answer request message sent by the CTI platform 503, receive and reply to the text chat content message sent by the media access module 502.

The CTI platform 503 configuring the routing of the text chat call according to the inquired operator agent state includes the following situations.

When an operator agent in the idle state exists, the text chat call is routed directly to the operator agent. When no operator agent in the idle state exists, the text chat call is routed to the operator agent in the serving state. When all the operator agents are in the busy state or in the offline state, the client is prompted to send an offline message, and when an operator agent in the idle state or in the serving state exists, the offline message is routed to the operator agent for processing.

The CTI platform 503 is further adapted to set the operator agent state according to the configuration result of the routing of the text chat call. The CTI platform 503 setting the operator agent state according to the configuration result of the routing of the text chat call includes the following situations.

When the operator agent in the idle state is configured with the routing of the text chat call, the operator agent is set to the serving state. When the operator agent in the serving state is configured with the routing of the text chat call, the identification of provided service quantity of the operator agent is increased by 1. If the identification of provided service quantity having been increased by 1 is smaller than the identification of maximum available service quantity, the operator agent is still set to the serving state. If the identification of provided service quantity having been increased by 1 is equal to the identification of maximum available service quantity, the operator agent is set to the busy state.

When the client intends to terminate the text chat with the call center system, the various components of the call center system would perform the following functions.

The client server 501 is further adapted for the client to send a release request message of the text chat call to the media access module 502.

The media access module 502 is further adapted to send the received release request message of the text chat call to the CTI platform 503, and terminate the text chat between the client and the operator agent according to the routing release success message returned by the CTI platform 503.

The CTI platform 503 is further adapted to send a routing release request message to the operator agent when receiving the release request message of the text chat call sent by the media access module 502, receive the routing release success message returned by the operator agent, and return the routing release success message to the media access module 502.

The operator agent server 504 is further adapted to return the routing release success message to the CTI platform 503 when receiving the routing release request message sent by the CTI platform 503.

The CTI platform 503 is further adapted to set the operator agent state according to the routing release success message. The CTI platform 503 setting the operator agent state according to the routing release success message includes the following situations.

When the routing of the text chat call is released from the operator agent in the busy state, the operator agent is set to the serving state. When the routing of the text chat call is released from the operator agent in the serving state, the identification of provided service quantity of the operator agent is decreased by 1. If the identification of provided service quantity having been decreased by 1 is zero, the operator agent is set to the idle state; and if the identification of provided service quantity having been decreased by 1 is not zero, the operator agent is still set to the serving state.

In this embodiment of the present invention, the CTI platform 503 is the device for routing a text chat provided by the embodiments of the present invention. The operator agent state is set, which includes an idle state, a serving state, a busy state, and an offline state. The serving state includes an identification of provided service quantity and an identification of maximum available service quantity. As such, when the CTI platform 503 receives the request message of the text chat call, the operator agent state is inquired, and the routing of the text chat call is configured according to the inquired operator agent state, which may enable one operator agent to provide the text chat service for several clients at the same time. Moreover, the CTI platform 503 sends the release request message of the routing to the operator agent when receiving the release request message of the text chat call, and sets the operator agent state according to the routing release success message returned by the operator agent, which may update the operator agent state in time, provide services for more clients, and enhance the service quality of the call center system.

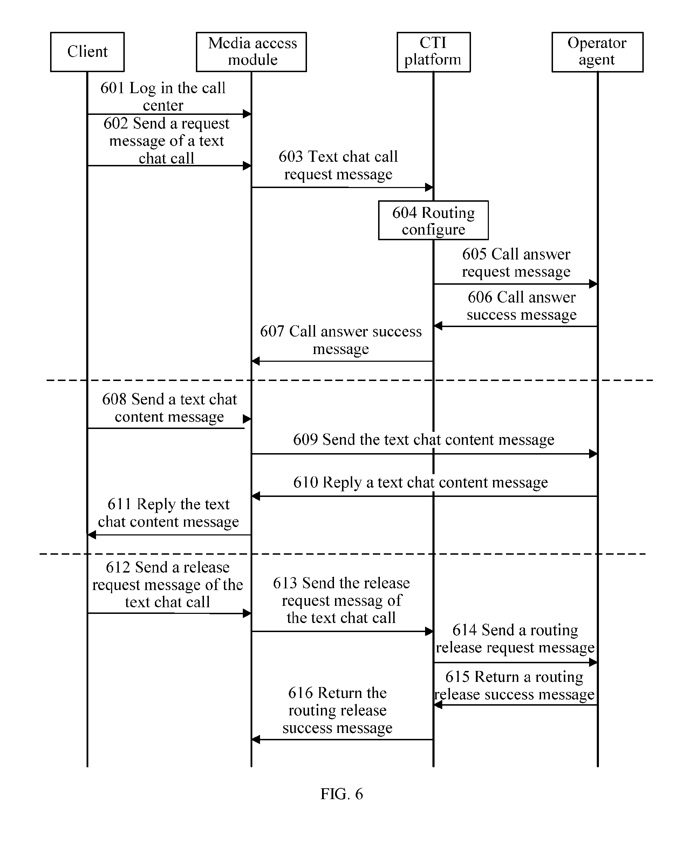

One specific embodiment will be taken to illustrate the method and call center system of the embodiments of the present invention more clearly hereinafter. Referring to FIG. 6, it is a flowchart of the call center system processing the text chat message according to an embodiment of the present invention, which includes the following steps.

Step 601: A client logs in to the call center through a client server.

For example, the client may log in to the call center through a WEB interface provided by the client server.

Step 602: The client sends a request message of a text chat call to a media access module.

The client can choose the service type, including a consulting service or a complaint service, and send the request message of the text chat call to the media access module.

Step 603: The media access module sends the request message of the text chat call to the CTI platform.

Step 604: The CTI platform carries out a routing configuration.

The method of routing configuring carried out by the CTI platform includes the following steps.

The CTI platform inquires the operator agent state. The operator agent state includes an idle state, a serving state, a busy state, and an offline state. The serving state includes an identification of provided service quantity and an identification of maximum available service quantity.

The CTI platform configures the routing of the text chat call according to the inquired operator agent state.

When an operator agent in the idle state exists, the text chat call is routed directly to the operator agent. When no operator agent in the idle state exists, the text chat call is routed to the operator agent in the serving state. Otherwise, when all the operator agents are in the busy state or in the offline state, the client is prompted to send an offline message.

Step 605: The CTI platform sends a call answer request message to an operator agent according to the configuration result of the routing of the text chat call.

Step 606: The operator agent returns a call answer success message to the CTI platform.

Step 607: The CTI platform returns the call answer success message to the media access module.

So far, the request message of the text chat call sent by the client has established a routing of the text chat call between the client and the operator agent via the routing configuration result of the CTI platform, and the operator agent waits to receive and reply to the text chat content message sent by the media access module.

Step 608: The client sends a text chat content message to the media access module through the client server.

Step 609: The media access module sends the text chat content message to the operator agent.

Step 610: The operator agent sends a replied text chat content message to the media access module.

Step 611: The media access module sends the text chat content message replied by the operator agent to the client.

So far, one text chat is accomplished between the client and the operator agent, and many text chat processes are the same as the steps 608 to 611. Moreover, the same operator agent may provide the text chat service for several clients at the same time.

Step 612: The client sends a release request message of the text chat call to the media access module through the client server.

Step 613: The media access module sends the release request message of the text chat call to the CTI platform.

Step 614: The CTI platform sends a routing release request message to the operator agent.

Step 615: The operator agent returns a routing release success message to the CTI platform.

Step 616: The CTI platform returns the routing release success message to the media access module.

So far, the media access module terminates the text chat between the client and the operator agent according to the routing release success message returned by the CTI platform.

People skilled in this art can understand that: the implementation of all or part of the steps in the above-mentioned method embodiments can be completed by hardware related to program instructions. The program may be stored in a computer readable storage medium. During running, the program executes the steps comprising the above-mentioned method embodiments. The storage medium comprises the various media which are able to store program codes such as ROM, RAM, diskette or compact disc, etc.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the spirit and scope of the present invention and covered in the claims of the present invention.

## Claims

1. A method for routing a text chat, comprising:
inquiring an operator agent state when receiving a request message of a text chat call, wherein the operator agent state comprises a serving state; and
configuring a routing of the text chat call when the inquired operator agent state is the serving state.

2. The method according to claim 1, wherein the serving state comprises an identification of provided service quantity and an identification of maximum available service quantity.

3. The method according to claim 2, wherein the configuring the routing of the text chat call when the inquired operator agent state is the serving state comprises:
routing the text chat call to the operator agent in the serving state when there is no operator agent in an idle state but an operator agent in the serving state.

4. The method according to claim 3, wherein the routing the text chat call to the operator agent in the serving state comprises:
routing the text chat call to an operator agent in the serving state with a minimum provided service quantity identification.

5. The method according to claim 2, wherein the operator agent state further comprises an idle state, a busy state, or an offline state.

6. The method according to claim 5, wherein when the inquired operator agent state is the idle state, the configuring the routing of the text chat call comprises: routing the text chat call directly to the operator agent; or
when the inquired operator agent state is the busy state or the offline state, the configuring the routing of the text chat call comprises: prompting a client to send an offline message, and when an operator agent in the idle state or in the serving state exists, routing the offline message to the operator agent for processing.

7. The method according to claim 5, further comprising:
setting the operator agent state according to a configuration result of the routing of the text chat call.

8. The method according to claim 7, wherein the setting the operator agent state according to a configuration result of the routing of the text chat call comprises:
when the operator agent in the idle state is configured with the routing of the text chat call, setting the operator agent to the serving state;
when the operator agent in the serving state is configured with the routing of the text chat call, increasing the identification of provided service quantity of the operator agent by 1; if the identification of provided service quantity having been increased by 1 is smaller than the identification of maximum available service quantity, still setting the operator agent to the serving state; and if the identification of provided service quantity having been increased by 1 is equal to the identification of maximum available service quantity, setting the operator agent to the busy state.

9. The method according to claim 7, further comprising:
when receiving a release request message of the text chat call, releasing the routing of the text chat call; and
setting the operator agent state according to a release result of the routing of the text chat call.

10. The method according to claim 9, wherein the setting the operator agent state according to a release result of the routing of the text chat call comprises:
setting the operator agent to the serving state when the routing of the text chat is released from the operator agent in the busy state;
decreasing the identification of provided service quantity of the operator agent by 1 when the routing of the text chat call is released from the operator agent in the serving state; if the identification of provided service quantity having been decreased by 1 is zero, setting the operator agent to the idle state; otherwise, still setting the operator agent to the serving state.

11. A device for routing a text chat, comprising:
an agent state inquiring module, adapted to inquire an operator agent state when receiving a request message of a text chat call, wherein the operator agent state comprises a serving state; and
a routing configuring module, adapted to configure the routing of the text chat call when the operator agent state inquired by the agent state inquiring module is the serving state.

12. The device according to claim 11, wherein the serving state comprises an identification of provided service quantity and an identification of maximum available service quantity.

13. The device according to claim 12, wherein the operator agent state further comprises: an idle state, a busy state, and an offline state.

14. The device according to claim 13, wherein the routing configuring module is further adapted to configure the routing of the text chat call when the inquired operator agent state is the idle state, the busy state, or the offline state.

15. The device according to claim 14, wherein the routing configuring module comprises:
an idle state routing sub-module, adapted to route the text chat call directly to an operator agent in the idle state when the operator agent in the idle state exists;
a serving state routing sub-module, adapted to route the text chat call to an operator agent in the serving state when no operator agent in the idle state but the operator agent in the serving state exists; and
an offline message prompting sub-module, adapted to prompt a client to send an offline message when all the operator agents are in the busy state or in the offline state.

16. The device according to any one of claims 13 to 15, further comprising:
an agent state setting module, adapted to set the operator agent state according to a configuration result of the routing of the routing configuring module, wherein the agent state setting module comprises:
an idle state setting sub-module, adapted to set the operator agent in the idle state to the serving state when the operator agent is configured with the routing of the text chat call; and
a serving state setting sub-module, adapted to increase the identification of provided service quantity of the operator agent by 1 when the operator agent in the serving state is configured with the routing of the text chat call, still set the operator agent to the serving state if the identification of provided service quantity having been increased by 1 is smaller than the identification of maximum available service quantity, and set the operator agent to the busy state if the identification of provided service quantity having been increased by 1 is equal to the identification of maximum available service quantity.

17. The device according to claim 16, further comprising:
a routing releasing module, adapted to release the routing of the text chat call when receiving a release request message of the text chat call, wherein the agent state setting module is further adapted to set the operator agent state according to a release result of the routing of the routing releasing module, and the agent state setting module further comprises:
a busy state releasing sub-module, adapted to set the operator agent in the busy state to the serving state when the routing of the text chat call is released from the operator agent in the busy state ;and
a serving state releasing sub-module, adapted to decrease the identification of provided service quantity of the operator agent by 1 when the routing of the text chat call is released off the operator agent in the serving state, set the operator agent to the idle state if the identification of provided service quantity having been decreased by 1 is zero, and still set the operator agent to the serving state if the identification of provided service quantity having been decreased by 1 is not zero.

18. A call center system, comprising a client server, a media access module, a computer telephony integration ( CTI ) platform, and an operator agent server, wherein:
the client server, adapted for a client to log in the call center system, send a request message of a text chat call to a media access module, submit and receive a text chat content message;
the media access module, adapted to send the received request message of the text chat call to the CTI platform, send the text chat content message submitted by the client to an operator agent according to a call answer success message returned by the CTI platform, and send a text chat content message replied by the operator agent to the client;
the CTI platform, adapted to inquire an operator agent state comprising a serving state when receiving the request message of the text chat call sent by the media access module, configure the routing of the text chat call and send a call answer request message to the operator agent according to a configuration result of the routing of the text chat call when the inquired operator agent state is the serving state, receive a call answer success message returned by the operator agent, and return the call answer success message to the media access module;
the operator agent server, adapted for the operator agent to log in to the call center system, return a call answer success message to the CTI platform according to the call answer request message sent by the CTI platform, receive and reply to the text chat content message sent by the media access module.

19. The call center system according to claim 18, wherein the serving state comprises an identification of provided service quantity and an identification of maximum available service quantity.

20. The call center system according to claim 19, wherein the operator agent state further comprises an idle state, a busy state, or an offline state.

21. The call center system according to any one of claims 18 to 20, wherein
the client server is further adapted for the client to send a release request message of the text chat call to the media access module;
the media access module is further adapted to send the received release request message of the text chat call to the CTI platform, and terminate a text chat between the client and the operator agent according to the routing release success message returned by the CTI platform;
the CTI platform is further adapted to send a routing release request message to the operator agent when receiving the release request message of the text chat call sent by the media access module, receive the routing release success message returned by the operator agent, and return the routing release success message to the media access module; and
the operator agent server is further adapted to return the routing release success message to the CTI platform when receiving the routing release request message sent by the CTI platform.
